Europäisches Patentamt

(19) European Patent Office

Office européen des brevets

(11) Publication number: **0 271 425**
**A1**

# (12) EUROPEAN PATENT APPLICATION

(21) Application number: 87630226.6

(22) Date of filing: 05.11.87

(51) Int. Cl.4: **H 01 F 3/10**
**B 23 K 35/24, B 23 K 35/30,**
**C 23 C 26/02**

(30) Priority: **07.11.86 US 928334**

(43) Date of publication of application:
**15.06.88 Bulletin 88/24**

(84) Designated Contracting States:
**DE ES FR GB IT SE**

(71) Applicant: **UNITED TECHNOLOGIES CORPORATION**
**United Technologies Building 1, Financial Plaza**
**Hartford, CT 06101 (US)**

(72) Inventor: **Banas, Conrad Martin**
**56 Volpi Road**
**Bolton Connecticut 06040 (US)**

**Whitney, Gary L.**
**116 Pilgrim Drive**
**Windsor Connecticut 06095 (US)**

(74) Representative: **Schmitz, Jean-Marie et al**
**OFFICE DENNEMEYER S.à.r.l. P.O. Box 1502**
**L-1015 Luxembourg (LU)**

(54) **Multimetallic article of manufacture.**

(57) A multimetallic article of manufacture comprises a body (40) of a first metallic material with discrete regions (65) therein of a second metallic material formed in situ by alloying of a third material with the first material. The alloying is performed by depositing the third material at locations on the body where the first material is melted by an energy beam (45) such as a carbon dioxide laser or electron beam.

FIG.5

EP 0 271 425 A1

# Description

## Multimetallic Article of Manufacture

### Technical Field

This invention relates generally to multimetallic articles of manufacture and particularly to such articles which comprise a body of a first metallic material having disposed therein, discrete areas of a second metallic material.

### Background Art

Multimetallic articles, i.e., articles formed from a first metallic material having discrete regions therein of a second metallic material, are employed in such apparatus as magnetic clutches, brakes and the like. In certain of such apparatus, the multimetallic article forms the body of an electromagnet and comprises a ferromagnetic (magnetizable) material with regions of a nonferromagnetic material such as copper or the like therein. Usually, the electromagnet body is formed in a generally flat, annular shape which may include an annular groove therein which receives an electric coil. The nonferromagnetic material extends substantially through the entire thickness of the magnet body in a multiplicity of circular segments to provide a means for reducing radial flux leakage from the electromagnet so that optimal flux is available for the magnetic coupling of the electromagnet body to a neighboring clutch or brake plate (armature).

A well known type of multimetallic electromagnetic body comprises a flat steel plate in which segmental slots are formed by machining or the like. The slots accommodate a malleable, nonferromagnetic metal such as hammered copper which reduce radial flux leakage as described hereinabove. Those skilled in the art of such electromagnetic devices will immediately recognize that such a structure, requiring both machining of the ferromagnetic plate and hammering of copper into the slots thus formed, is not only time consuming, but expensive to manufacture. Furthermore, the machined slots even though subsequently filled with copper, weaken the body to such an extent that to compensate for such weakening, the overall size of the body must be increased. This may render the body, and therefore, the electromagnet in which it is used, unsuitably bulky. While some of the bulk can be reduced by eliminating the nonferromagnetic slot fillings, such a construction may not provide the requisite reduction in radial flux leakage and also, may further contribute to the mechanical weakness of the body.

Accordingly, it is evident that in electromagnetic clutches, brakes and other apparatus, multimetallic bodies of enhanced strength, compactness and manufacturability are desirable.

### Disclosure of Invention

In accordance with the present invention, a multimetallic article of manufacture comprises a body formed from a first metallic material having discrete regions therein of a second metallic material which comprises an alloy of the first material and a third material. The third material is alloyed to the first material in situ at the locations of such regions, whereby the article is microstructurally continuous for enhanced strength and compactness.

The first material may comprise a ferromagnetic material which is heated with an energy beam, thereby melting and vaporizing this material at the locations of the discrete regions. The third material may comprise a material such as Nichrome or Monel which is added to the melted and vaporized ferromagnetic material. Such a process alloys the Nichrome or Monel to the steel to form discrete regions of nonmagnetizable stainless steel (in the case of Nichrome) or nonmagnetizable steel which is enriched with nickel and copper (in the case of Monel).

Since the third material is alloyed in situ to the first material, there are no discontinuities between the first material and the regions of the second material. In other words, the entire article of manufacture is microstructurally continuous for enhanced strength and, therefore, enhanced compactness. The energy beam provides a convenient means for melting the first material through substantially the entire thickness thereof, whereby the process for manufacturing the article of the present invention readily lends itself to economical and time-efficient automated techniques.

### Brief Description of Drawings

Fig. 1 is a simplified, isometric, exploded view of a prior art electromagnetic clutch or brake;

Fig. 2 is a partially sectioned elevation of the electromagnetic clutch or brake shown in Fig. 1;

Fig. 3 is an isometric view of a prior art electromagnet body employable in a magnetic clutch or brake of the type shown in Figs. 1 and 2;

Fig. 4 is an isometric view of the multimetallic article of the present invention as zones of a second material are established in a body or blank of a first material; and

Fig. 5 is an enlarged, partially sectioned view of the article of Fig. 4, taken in the direction of line 5-5 thereof.

### Best Mode for Carrying Out the Invention and Industrial Applicability Thereof

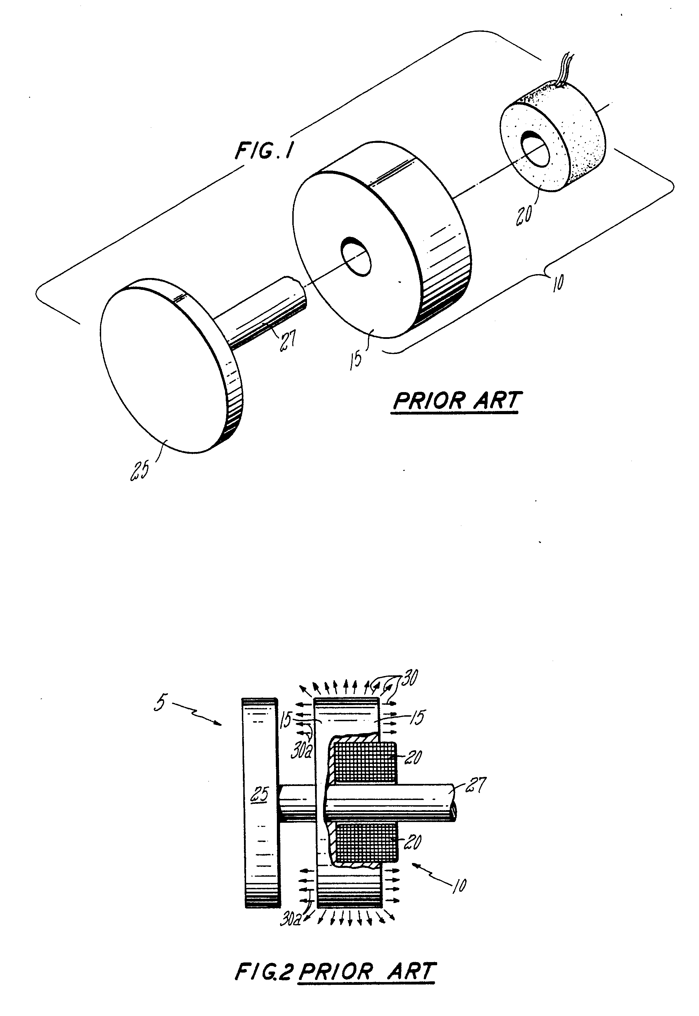

Referring to Figs. 1 and 2, a prior art magnetic brake or clutch 5 comprises an electromagnet 10 which includes a ferromagnetic body 15 having a recess therein which accommodates electric coil 20. A ferromagnetic clutch or brake plate (armature) 25 has a longitudinal shaft 27 outstanding therefrom, the shaft being reciprocatably received within coaxial apertures in body 15 and coil 20. As is well known, in operation, energization of coil 20 creates a magnetic field through and outwardly of body 15 as represented by arrows 30, such a magnetic field attracting armature 25 toward body 15 as shaft 27 slides through the aligned central apertures of the body and coil.

As those skilled in the electromagnetic arts will readily appreciate, only that portion of the magnetic field between electromagnet 10 and armature 25 is useful in actuating the clutch or brake (attracting the armature toward the electromagnet). This useful portion of the electromagnetic field is indicated by arrows 30a. It is well known that operation of the electromagnetic brake or clutch is improved significantly by tailoring the magnetic field to maximize the density of the field between the armature and the electromagnet. This is normally accomplished by magnetic insulators which block that portion of the magnetic field which would otherwise leak radially outwardly of the magnet.

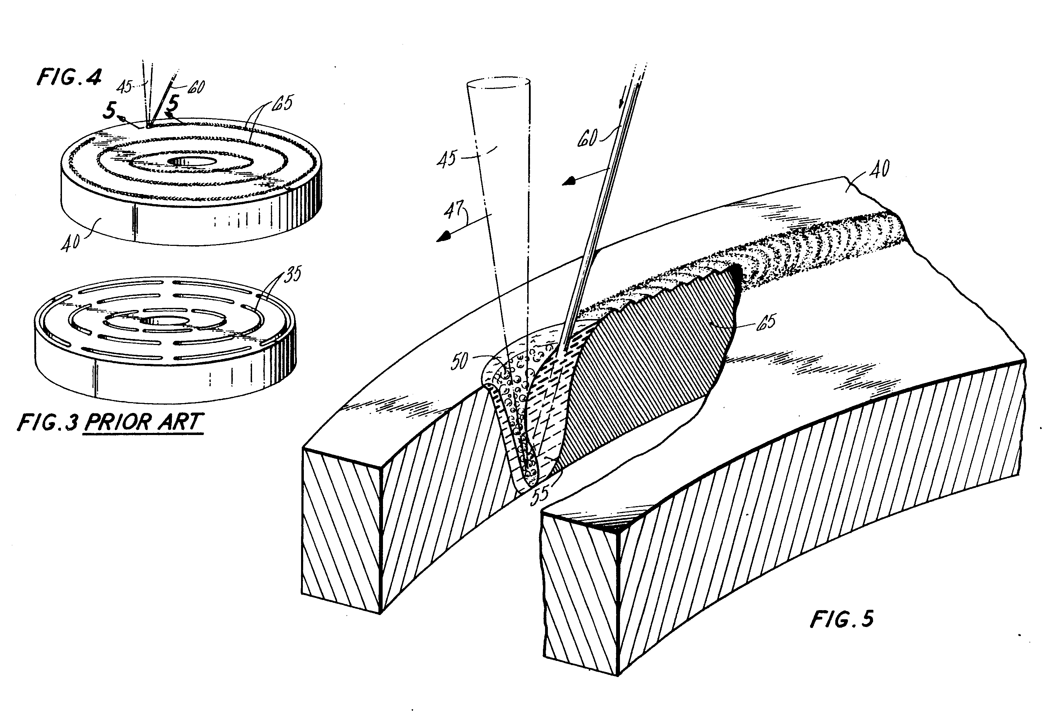

Fig. 3 illustrates a prior art electromagnet body wherein spaced, circular slots 35 are machined in the electromagnet body thereby increasing the reluctance of the body at the slot locations to reduce the density of the radial field induced in the body, thereby reducing radial leakage flux therefrom. While such an electromagnet construction can indeed so reduce radial leakage flux, it is readily apparent that the removal of material in forming the slots could adversely effect the strength and structural integrity of the electromagnet. Where the electromagnet is required to carry significant mechanical loads, to compensate for the weakening of the body due to removal of the slot material, it may be necessary to increase the size (mass) of the body. However, it will be appreciated that this increases the overall bulk of the body and may, therefore, be unacceptable in situations where there are constraints on the size and/or mass of the electromagnet. It will also be appreciated that the formation of the slots by prior art methods such as machining requires a great deal of time and, therefore, may contribute significantly to the manufacturing costs of the apparatus.

Furthermore, although mere removal of ferromagnetic material from an electromagnet will completely block the radial field through those portions (slots) of the electromagnet from which the material is removed, radial flux can traverse the remaining inter-slot webs required for mechanical integrity. Attempts to replace the webs with nonferromagnetic material to further reduce radial leakage have been made. For example, nonmagnetizable material such as copper or other malleable material may be hammered, in a cold state, into annular slots. However, it will be readily appreciated that such a technique weakens the structure and requires further material and manufacturing time and thus, further increases the manufacturing costs of the electromagnet.

In accordance with the present invention, zones of extremely high reluctance for tailoring magnetic field distribution throughout an electromagnet body are formed by alloying a nonferromagnetic material with the ferromagnetic material of the body in situ, at discrete regions of the body. This forms zones of nonferromagnetic material within the body which are microstructurally continuous with respect to the remainder of the body for enhanced strength and structural integrity.

Referring to Figs. 4 and 5, in accordance with the present invention, a ferromagnetic body 40 is heated by an energy beam 45 such as a laser beam or an electron beam which moves along the body in a circumferential direction with respect thereto as indicated by arrow 47. Alternately, the body may move with respect to the energy beam in the direction of arrow 47. In either case, energy beam 45 melts and vaporizes the ferromagnetic material through the entire thickness of the plate, the vaporized material being shown at 50 and the melted material which surrounds the core of vaporized material, at 55. As the ferromagnetic material is melted and vaporized by the energy beam, a nonferromagnetic material 60 (in this case in rod form) is added to the vaporized and melted portions of the body, forming a solution therewith which, when cooled, comprises a nonmagnetic alloy 65 of the ferromagnetic and nonferromagnetic materials.

In the preferred embodiment, the ferrogmagnetic material comprises a low hysteresis steel of from approximately 0.06% to approximately 0.10% by weight, carbon. Nonferromagnetic material 60 may comprise such metals as chromium-nickel alloys (Nichrome) or copper-nickel alloys (Monel). When material 60 comprises a chromium-nickel alloy of approximately 79% chromium and 20% nickel, which is alloyed with the hereinabove noted low hysteresis carbon steel at a 25% dilution rate, the resulting nonmagnetic alloy 65 comprises essentially 18-8 (18% chromium and 8% nickel) (304) austenitic stainless steel which forms an effective barrier to any radial magnetic flux lines within the electromagnet body. To effect the heating necessary to alloy the nickel-chromium alloy with the low hysteresis carbon steel, a high energy carbon dioxide laser of the type manufactured and sold by United Technologies Corporation may be used.

It will be appreciated that an electromagnet body in accordance with the invention herein is microstructurally continuous at the borders between the ferromagnetic and nonferromagnetic regions thereof, thereby exhibiting enhanced strength in comparison to prior art electromagnet bodies wherein flux barriers therein are achieved by removal of material therefrom. This microscopic continuity enables the nonmagnetic regions to be formed in closed annuli without compromising the structural integrity of the body. Thus, spacing the nonmagnetic regions is unnecessary, thereby resulting in enhanced blockage of radial flux leakage. Furthermore, the electromagnet body is economical to produce since no machining is involved and the melting and alloying process lends itself conveniently to automated manufacturing techniques.

While the invention herein has been described with respect to an electromagnet body, it will be readily appreciated that this invention exhibits equal utility in any application where an in situ alloying of a first material with a second material by means of an energy beam to produce a microstructurally continuous multimetallic body is desired. Whereas the invention has been described with respect to specific materials utilized therein, it will be appreciated that any materials which may be alloyed with one another by in situ heating thereof, may be employed. Similarly, while the process by which the invention herein is made, is described as utilizing a laser beam to melt the materials for alloying, it will be appreciated that other equivalent energy beam devices may be employed. For example, an electron beam (noted hereinabove) may be employed within a vacuum chamber to provide the necessary heat for in situ alloying. It is intended by the following claims to cover these and any other variations or modifications, which fall within the true spirit and scope of the invention herein.

Having thus described the invention, what is claimed is:

## Claims

1. In an article of manufacture comprising a body formed from a first metallic material including discrete regions therein of a second metallic material, which regions extend substantially through the entire thickness of said body, the improvement characterized by:

said second material being an alloy of said first material and a third material, and being formed in situ at the locations of said regions whereby said body is microstructurally continuous.

2. The article of manufacture of claim 1 characterized by said first material comprising a ferromagnetic material and said second material comprising a nonferromagnetic material.

3. The article of manufacture of claim 2 characterized by said ferromagnetic material comprising a low hysteresis, carbon steel and said nonferromagnetic material comprising an austenitic, stainless steel.

4. The article of manufacture of claim 3 characterized by said low hysteresis, carbon steel having a carbon content of from approximately six-one hundredths to approximately one-tenth percent by weight.

5. The article of manufacture of claim 3 characterized by said third material comprising an alloy of chromium and nickel.

6. The article of manufacture of claim 5 wherein said chromium-nickel alloy comprises approximately eighty percent by weight, chromium and twenty percent by weight, nickel.

7. In a magnetic coupling comprising an electromagnet including an electric coil and a body of ferromagnetic material; and an armature generally aligned with said ferromagnetic body and engageable thereby; said ferromagnetic body including therein, a distribution of nonferromagnetic regions therein for minimizing flux leakage therefrom; the improvement characterized by:

each of said nonferromagnetic regions comprising an iron alloy which is formed in situ at the locations of said regions, whereby said ferromagnetic body is microstructurally continuous for enhanced economy, mechanical strength and compactness.

8. The magnetic coupling of claim 7 characterized by said nonferromagnetic regions comprising closed bands extending substantially entirely through the thickness of said ferromagnetic body and generally parallel to the periphery thereof.

9. The magnetic coupling of claim 8 characterized by said ferromagnetic body being generally disk-shaped and each of said nonferromagnetic regions being generally annular in shape.

10. The magnet coupling of claim 7 characterized by said ferromagnetic material comprising a low hysteresis, carbon steel of from approximately six one-hundredths to approximately one-tenth percent by weight carbon and said nonferromagnetic regions comprise austenitic stainless steel.

0271425

**FIG.1**

*PRIOR ART*

10

20

15

27

25

5

30

15

15

30a

20

25

27

20

30a

10

**FIG.2 PRIOR ART**

FIG.4

FIG.3 PRIOR ART

FIG.5

0271425

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | EP-A-0 193 674 (OSAKA UNIVERSITY) <br> * Page 3, line 13 - page 8, line 22 * <br> --- | 1 | H 01 F 3/10 <br> B 23 K 35/24 <br> B 23 K 35/30 <br> C 23 C 26/02 |
| A | US-A-4 499 158 (HITACHI) <br> * Columns 3-6 * <br> --- | 1-5 | |
| A | US-A-3 650 709 (AVESTA JERNVERKS AB) <br> * Column 2, line 7 - column 3, line 76 * <br> --- | 1-5 | |
| A | CHEMICAL ABSTRACTS, vol. 102, 1985, page 218, abstract no. 49360f, Columbus, Ohio, US; Y. NILSSON: "Surface melting of cast iron with a high-power laser beam", & HIGH TEMP. TECHNOL. 1984, 2(3), 159-62 <br> * Abstract * <br> --- | 1,2 | |
| A | GB-A- 733 610 (AMERICAN MACHINE & FOUNDRY CO.) <br> * Page 1, lines 43-90 * <br> --- | 2,8,9 | **TECHNICAL FIELDS SEARCHED (Int. Cl.4)** |
| A | PATENT ABSTRACTS OF JAPAN, vol. 4, no. 16 (C-72), 7th February 1980, page 71 C 72; & JP-A-54 151 527 (KOBE SEIKOSHO K.K.) 28-11-1979 <br> * Abstract * <br> --- | 2 | H 01 F 3/00 <br> H 01 F 41/00 <br> B 23 K 35/00 <br> B 23 K 26/00 <br> C 23 C 26/00 |
| A | EXTENDED ABSTRACTS, vol. 83, no. 2, 9th-14th October 1983, page 261, abstract no. 170, Washington, DC, US; E. McCAFFERTY et al.: "Corrosion behavior of laser alloyed stainless steels" <br> * "Results and discussion", paragraph 2 * <br> ---      -/- | 6 | |

The present search report has been drawn up for all claims

| Place of search | Date of completion of the search | Examiner |
|---|---|---|
| THE HAGUE | 22-02-1988 | VANHULLE R. |

EPO FORM 1503 03.82 (P0401)

European Patent Office

**EUROPEAN SEARCH REPORT**

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| A | US-A-4 212 900 (R.A. SERLIN) --- | | |
| A | US-A-4 346 280 (S.V. GULAKOV) --- | | |
| A | PATENT ABSTRACTS OF JAPAN, vol. 9, no. 166 (C-290)[1889], 11th July 1985; & JP-A-60 36 615 (SHIN NIPPON SEITETSU K.K.) 25-02-1985 --- | | |
| A | OPTICAL ENGINEERING, vol. 19, no. 5, September/October 1980, pages 783-792, Society of Photo-Optical Instrumentation Engineers, Bellingham, US; D.S. GNANAMUTHU: "Laser surface treatment" ----- | | |
| | | | **TECHNICAL FIELDS SEARCHED (Int. Cl.4)** |

The present search report has been drawn up for all claims

| Place of search | Date of completion of the search | Examiner |
|---|---|---|
| THE HAGUE | 22-02-1988 | VANHULLE R. |

EPO FORM 1503 03.82 (P0401)